# EUROPÄISCHE PATENTSCHRIFT

(11) **EP 3 399 215 B1**
(45) Veröffentlichungstag und Bekanntmachung des Hinweises auf die Patenterteilung: **08.07.2020**
(21) Anmeldenummer: 17169766.7
(22) Anmeldetag: 05.05.2017
(51) Int. Cl.: F16H 25/24, B01L 3/02, G01B 3/18, G01N 35/10

(54) **SPINDELANTRIEB**
SPINDLE DRIVE
ENTRAÎNEMENT DE BROCHE

(43) Veröffentlichungstag der Anmeldung: 07.11.2018
(73) Patentinhaber: Eppendorf AG, 22339 Hamburg (DE)
(72) Erfinder: Reichmuth, Burkhardt, 22041 Hamburg (DE); Wilth, Marc, 22145 Hamburg (DE); Sattler, Jörg, 20251 Hamburg (DE)
(74) Vertreter: Hauck Patentanwaltspartnerschaft mbB

(56) Entgegenhaltungen:
- WO-A1-2017/129179
- DE-A1-102015 212 448
- DE-B- 1 053 883
- JP-A- S6 334 361

## Beschreibung

Die Erfindung betrifft einen Spindelantrieb umfassend eine Gewindespindel und eine Spindelmutter, insbesondere für die Messtechnik, Stelltechnik und Antriebstechnik.

Spindelantriebe werden in der Messtechnik insbesondere zum Messen von Längen oder Abständen verwendet. Ein Beispiel ist die Messschraube (ältere Bezeichnung: Mikrometerschraube, Mikrometer), die in Ausführung als Bügelmessschraube zur Bestimmung von Außenmaßen, als Innenmessschraube zur Bestimmung von inneren Abständen und als Tiefenmessschraube zur Tiefenmessung herangezogen wird. An optischen Geräten kommen Messschrauben zur Verschiebung von Messmarken zum Einsatz. Sie werden als Messokulare, Messschraubenokulare oder Okularmessschrauben bezeichnet.

In der Stelltechnik werden Spindelantriebe insbesondere für Positionierungs- und Justierungsaufgaben eingesetzt. Ein weites Einsatzgebiet solcher Stelleinrichtungen oder Stellglieder ist die Steuerungs- und Regelungstechnik. Ferner werden Spindelantriebe in der Mikro- und Feinjustage verwendet. Des Weiteren werden Spindelantriebe zum Öffnen und Schließen von Gehäusen und Einstellen von anderen Geräteteilen eingesetzt. In der Gebäudetechnik kommen sie zum Öffnen und Schließen von Türen, Toren und Fenstern zum Einsatz.

In der Dosiertechnik werden Spindelantriebe zum Einstellen der Dosiermenge verwendet. Bekannt sind Pipettiervorrichtungen mit einer Hubstange zum Antreiben eines Kolbens in einem Zylinder, um Flüssigkeit in eine Pipettenspitze oder Spritze einzusaugen und aus dieser auszustoßen. Die Pipettiervorrichtungen umfassen eine Einstelleinrichtung zum Einstellen des Dosiervolumens mit einer Spindelmutter und einer Gewindespindel, wobei eines dieser Bauteile feststeht und das andere schraubbar ist. Das schraubbare Bauteil weist einen Anschlag auf, der mit einem Gegenanschlag der Hubstange zusammenwirkt. Durch Einstellen des Anschlages wird der Hub der Hubstange begrenzt und das Dosiervolumen eingestellt.

Auch in der Antriebstechnik gibt es vielfältige Anwendungen. Im Bereich der Automatisierungstechnik kommen Linearantriebe beispielsweise in XYZ- Übertragungssystemen und anderen Roboterarmen zum Einsatz. In der Werkzeugmaschinentechnik dienen sie beispielsweise der Verlagerung von Werkzeugschlitten. In der Dosiertechnik kommen Spindelantriebe zum Einsatz, um einen Kolben in einem Zylinder zu verlagern und hierdurch Flüssigkeit anzusaugen und auszustoßen.

Elektronische Dosiervorrichtungen zum Dosieren von Flüssigkeiten umfassend einen elektrischen Dosierantrieb mit Spindelantrieb und elektrischem Antriebsmotor werden insbesondere in wissenschaftlichen und industriellen Labors mit medizinischen, molekularbiologischen und pharmazeutischen Anwendungsgebieten eingesetzt. Bei Direktverdrängersystemen wird die Dosiervorrichtung mit einer austauschbaren Spritze gekoppelt. Der elektronische Dosierantrieb treibt einen Spritzenkolben in einem Spritzenzylinder der Spritze an. Bei Luftpolstersystemen umfasst die elektronische Dosiervorrichtung außer dem Dosierantrieb einen Zylinder und einen darin verlagerbaren, mit dem Dosierantrieb gekoppelten Kolben. Ferner weist sie einen Dichtsitz zum abdichtenden Festklemmen einer Pipettenspitze auf. Ein Loch im Dichtsitz ist über einen Kanal mit dem Zylinder verbunden.

Elektronische Handdosiervorrichtungen sind vom Benutzer mit nur einer Hand tragbar und bedienbar. Direktverdrängersysteme werden auch als elektronische Dispenser oder Repetierpipetten bezeichnet. Luftpolstersysteme werden auch als Pipetten bezeichnet. Hierbei handelt es sich um Halbautomaten, da sie von Hand positioniert und bedient werden müssen, wobei der (Spritzen-)Kolben von einem elektrischen Antriebsmotor angetrieben wird.

Ferner sind elektronische Dosiervorrichtungen in Dosierautomaten (LHS = Liquid Handling Stations) und Laborautomaten (WS = Work Stations) integriert. Diese weisen ein Dosierwerkzeug und einen Roboterarm zur Positionierung des Dosierwerkzeuges auf. Der Roboterarm ist z.B. ein XYZ-Übertragungssystem.

Bei den vorstehenden Spindelantrieben bestehen Gewindespindel und Spindelmutter aus Metall.

Nachteilig ist die aufwendige Fertigung der Gewindespindel mittels hochpräziser Drehmaschinen und Nachbearbeitung, z.B. durch Entgraten. Ferner kann es zu einem Schlagen der Gewindespindel kommen, wenn sie mit einem nicht geführten Ende weiter aus der Spindelmutter heraussteht. Der Spindelantrieb ist korrosionsanfällig. Durch Korrosion wird die Reibung und damit der Verschleiß erhöht sowie die Genauigkeit vermindert. Der Spindelantrieb benötigt Schmiermittel, welches Staub bindet, wodurch der Verschleiß erhöht und die Genauigkeit herabgesetzt wird. Überlast kann zu plastischer Verformung führen, die ebenfalls die Präzision des Spindelantriebs herabsetzt.

Dier EP 2 165 765 B1 beschreibt eine Pipettiervorrichtung mit einstellbarem Dosiervolumen, bei der das Innengewinde der Spindelmutter oder das Außengewinde der Gewindespindel mindestens teilweise durch Einschrauben der Gewindespindel in die Spindelmutter geformt ist. Hierfür besteht eines der beiden Gewinde aus Kunststoff und das andere aus Metall. Hierdurch kann erreicht werden, dass die Gewindespindel spielfrei in der Spindelmutter gehalten ist. Nachteilig sind die hohen Einstellkräfte aufgrund der Reibung zwischen den beiden Bauteilen.

Die DE 10 53 883 A beschreibt eine Gewindespindel aus Blech, die aus zwei U-Profilstreifen zusammengesetzt ist, die an ihren Längskanten miteinander verschweißt sind. Der Abstand der Schweißraupen auf den beiden Seiten der Gewindespindel ist kleiner als der Durchmesser des Gewindekerns. Diese Gewindespindel eignet sich für vom Kraftfahrer mitzunehmende einfache Wagenheber, für Spannvorrichtungen an Werk- und Hobelbänken, z.B. in Schreinereien und Glasereien, für Schraubenzwingen und sonstige Einrichtungen, bei denen an die Spindel keine allzu hohe Anforderungen hinsichtlich der Laufeigenschaften gestellt werden.

Die DE 10 2015 212 448 A1 beschreibt einen Spindelantrieb umfassend eine Spindel mit Spindelgewinde und eine Spindelmutter mit Muttergewinde. Das Spindelgewinde und das Muttergewinde sind als ein Kopfspiel und ein Fußspiel sowie ein Flankenspiel aufweisendes Bewegungsgewinde ausgebildet. Die Spindel und die Spindelmutter sind über ein reduziertes Kopfspiel und/oder ein reduziertes Fußspiel zentrierbar.

Die DE1053883B offenbart, nach Auffassung der Prüfungsabteilung des europäischen Patentamts, einen Spindelantrieb, der unter den Wortlaut des Oberbegriffs des Anspruchs 1 fällt.

Davon ausgehend liegt der Erfindung die Aufgabe zugrunde, einen einfacher herstellbaren und präzise arbeitenden Spindelantrieb zu schaffen.

Gemäß der Erfindung wird die Aufgabe durch einen Spindelantrieb mit den Merkmalen von Anspruch 1 gelöst. Vorteilhafte Ausgestaltungen des Spindelantriebs sind in Unteransprüchen angegeben.

Der erfindungsgemäße Spindelantrieb umfasst:
- eine Gewindespindel mit einem Außengewinde,
- eine Spindelmutter mit einem Innengewinde, das mit dem Außengewinde der Gewindespindel in Eingriff steht,
dadurch gekennzeichnet, dass
- das Außengewinde der Gewindespindel mehrere Gewindebereiche aufweist, die durch in Längsrichtung erstreckte erste Abflachungen an ihrem Umfang voneinander getrennt sind, und
- die ersten Abflachungen Führungsbereiche aufweisen, die am Kerndurchmesser des Innengewindes der Spindelmutter anliegen,

Erfindungsgemäß weist der Spindelantrieb eine Gewindespindel auf, die in mehrere Gewindebereiche und mehrere Führungsbereiche unterteilt ist. In Umfangsrichtung ist auf beiden Seiten jedes Führungsbereiches jeweils ein Gewindebereich und auf beiden Seiten jedes Gewindebereichs jeweils ein Führungsbereich angeordnet. Die Gewindebereiche greifen in das Innengewinde der Spindelmutter ein, wodurch die Verlagerung der Gewindespindel beim Drehen gewährleistet ist. Die Führungsbereiche liegen am Kerndurchmesser des Innengewindes der Spindelmutter an, so dass sie in der Spindelmutter geführt sind. Infolgedessen ist die Spindelmutter gleichzeitig eine Führungsbuchse für die Gewindespindel. Auf zusätzliche Bauteile zum Führen der Gewindespindel kann verzichtet werden und Platz zum Unterbringen zusätzlicher Bauteile wird eingespart. Deshalb ist auch bei beengten Platzverhältnissen eine verbesserte Führung der Gewindespindel möglich. Der Spindelantrieb ist besonders präzise, weil die Gewindespindel in der Spindelmutter geführt ist.

Gemäß einer Ausführungsart der Erfindung ist die Gewindespindel ein Spritzgießteil. Bei dieser Ausführungsart ist die Gewindespindel durch Spritzgießen hergestellt. Die Unterteilung der Gewindespindel in Gewindebereiche und Führungsbereiche ist vorteilhaft für die Herstellung der Gewindespindel durch Spritzgießen, da die Unterteilung des Außengewindes eine spritzgusstechnische Herstellung mittels eines Spritzgießwerkzeuges mit mehreren Formteilen ermöglicht. Die Trennebene des Spritzgießwerkzeugs kann so gelegt werden, dass sie in die Führungsbereiche fällt. Hierdurch können Hinterschnitte in den Gewindebereichen vermieden oder stark reduziert werden, welche die Entformung der Gewindespindel aus dem Spritzgießwerkzeug behindern und die Präzision beeinträchtigen. Die Kosten für die Herstellung der Gewindespindel können reduziert und eine Nachbearbeitung eingespart werden.

Gemäß einer weiteren Ausführungsart besteht die Gewindespindel aus einem ersten Kunststoff. Die Gewindespindel aus Kunststoff hat verbesserte Gleiteigenschaften. Hierdurch wird der Verschleiß reduziert und der Verlust an Präzision verringert.

Auch die Korrosionsfestigkeit und chemische Beständigkeit der Gewindespindel aus Kunststoff verringert den Verschleiß und den damit verbundenen Verlust an Präzision. Zudem stehen Kunststoffe mit verbesserten Gleiteigenschaften zur Verfügung, so dass Schmiermittel entfallen kann, welches Staub bindet und Verschleiß sowie Verlust an Präzision verursacht. Es ist aber auch möglich, die Gleiteigenschaften durch Applizieren von geringen Mengen von Schmiermittel noch zu verbessern. Durch die verringerte Reibung zwischen Gewindespindel und Spindelmutter wird die Stromaufnahme des Motors gesenkt und die Akkulaufzeit erhöht. Schließlich wird durch die Gewindespindel aus Kunststoff das Gewicht des Spindelantriebs verringert. Kunststoffe mit hoher mechanischer Belastbarkeit stehen zur Verfügung. Da diese Kunststoffe nur eine geringe oder gar keine plastische Verformbarkeit haben, sondern bei Überlastung brechen, führt eine Überlastung nicht zu einer Verschlechterung der Präzision, sondern zum Bruch, so dass die Notwendigkeit einer Reparatur leicht erkennbar ist. Gemäß einer bevorzugten Ausführungsart ist die Gewindespindel aus Kunststoff ein Spritzgießteil. Gemäß einer anderen Ausführungsart ist die Gewindespindel aus Kunststoff ein Sinterteil, d.h. die Gewindespindel ist durch Sintern von Kunststoffpartikeln hergestellt. Gemäß einer anderen Ausführungsart ist die Gewindespindel aus Kunststoff durch Schneiden, Walzen und/oder Fräsen hergestellt. Gemäß einer anderen Ausführungsart ist die Gewindespindel aus Kunststoff durch 3D-Drucken hergestellt.

Gemäß einer weiteren Ausführungsart besteht die Gewindespindel aus Metall. Gemäß einer weiteren Ausführungsart ist die Gewindespindel aus Metall durch Schneiden, Walzen und/oder Fräsen hergestellt. Gemäß einer weiteren Ausführungsart ist die Gewindespindel aus Metall durch Sintern von Metallpulver hergestellt.

Gemäß einer weiteren Ausführungsart ist die Gewindespindel MIM (*Metal Injection Molding*) hergestellt. Dabei wird ein Metallpulver mit einer Kunststoffmatrix vermengt und spritzgegossen. Das Ergebnis ist eine Gewindespindel, die vollständig oder im Wesentlichen aus Metall besteht, weil der Kunststoff beim Herstellungsprozess entfernt wird.

Die vorteilhaften Wirkungen der Herstellung der Gewindespindel durch Spritzgießen kommen sowohl einer durch Spritzgießen hergestellten Gewindespindel aus Kunststoff als auch der durch MIM hergestellten Gewindespindel zu.

Der Spindelantrieb eignet sich insbesondere für Einsatzfälle, in denen es auf Präzision, Laufruhe und geringes Gewicht des Antriebes ankommt.

Gemäß einer bevorzugten Ausführungsart der Erfindung ist zwischen den Führungsbereichen und dem Kerndurchmesser des Innengewindes eine Spielpassung vorhanden. Hierbei ist der nominale Kerndurchmesser des Innengewindes gleich dem nominalen Durchmesser der Gewindespindel an den Führungsbereichen. Der nominale Durchmesser an den Führungsbereichen ist der Durchmesser des kleinsten die Führungsbereiche berührenden und diese vollständig umhüllenden Kreises. Die Toleranzen der beiden Durchmesser sind so gewählt, dass eine Spielpassung vorliegt. Beispielsweise ist bei einem nominalen Durchmesser von 3,25 mm für den Kerndurchmesser eine Toleranz H11 gewählt, die eine Abweichung von 0 bis + 75 µm vom Nominaldurchmesser zulässt. Ferner ist für den Außendurchmesser der Führungsbereiche eine Toleranz d9 gewählt, die eine Abweichung vom Nominaldurchmesser von -30 µm bis -60 µm zulässt. Damit beträgt das Spiel zwischen Innengewinde und Führungsrippen minimal 30 µm und maximal 135 µm.

Das Spiel der Spielpassung beträgt gemäß einer bevorzugten Ausführungsart maximal 150 µm und minimal 0 µm, weiterhin vorzugsweise maximal 135 µm und minimal 30 µm.

Gemäß einer weiteren Ausführungsart tragen die Abflachungen Führungsrippen, die an den äußeren Enden die Führungsbereiche aufweisen. Hierdurch wird eine besonders reibungsarme Führung der Gewindespindel in der Spindelmutter erreicht. Zudem sind Führungsrippen vorteilhaft für die Herstellung der Gewindespindel durch Spritzgießen, weil die Trennebene des Spritzgießwerkzeuges in die Ebene der Führungsrippen gelegt werden kann.

Gemäß einer bevorzugten Ausführungsart hat die Gewindespindel nur zwei einander diametral gegenüberliegende erste Abflachungen, in die die Trennebene von zwei Werkzeughälften eines Spritzgießwerkzeuges gelegt werden kann. Gemäß einer weiteren Ausführungsart sind nur zwei einander diametral gegenüberliegende Führungsrippen vorhanden. Dies ermöglicht ein verhältnismäßig einfaches Spritzgießwerkzeug bei leichter Entformbarkeit und hoher Maßhaltigkeit.

Gemäß einer weiteren Ausführungsart haben die Führungsrippen jeweils an den Enden eine zweite Abflachung und angrenzend an den beiden seitlichen Rändern der zweiten Abflachung Führungsbereiche in einem Abstand von der Mittelachse der Gewindespindel entsprechend dem halben Kerndurchmesser der Spindelmutter. Bei dieser Ausführungsart werden die Führungsrippen jeweils an den Führungsbereichen beidseitig der zweiten Abflachungen geführt. Dies hat den Vorteil, dass beim Spritzgießen der Gewindespindel an den zweiten Abflachungen erzeugte Entformungsgrate nicht in Kontakt mit der Spindelmutter kommen und ein präzises Führen der Gewindespindel in der Spindelmutter verhindern. Grundsätzlich ist es aber auch möglich, die Gewindespindel an den äußeren Enden der Führungsrippen dort zu führen, wo sich bei der Herstellung die Trennebene des Spritzgießwerkzeugs befindet. Entformungsgrate können durch präzise Herstellung des Spritzgießwerkzeugs vermieden bzw. durch Nachbearbeitung entfernt werden.

Gemäß einer weiteren Ausführungsart sind die ersten Abflachungen ebene Flächen und/oder sind die zweiten Abflachungen ebene Flächen. Gemäß einer bevorzugten Ausführungsart stehen von durch ebene Flächen gebildeten ersten Abflachungen Führungsrippen nach außen vor. Die Bereiche einer ersten Abflachung in Form ebener Flächen, die auf verschiedenen Seiten derselben Führungsrippe angeordnet sind, können parallel oder abgewinkelt zueinander ausgerichtet sein.

Gemäß einer alternativen Ausführungsart sind die ersten Abflachungen nach außen gekrümmt und/oder sind die zweiten Abflachungen nach außen gekrümmt. Die Krümmungsradien der ersten Abflachungen sind größer als der halbe Kerndurchmesser des Innengewindes der Spindelmutter oder diesem gleich und/oder die Krümmungsradien der zweiten Abflachungen sind größer als der halbe Kerndurchmesser des Innengewindes der Spindelmutter.

Gemäß einer alternativen Ausführungsart sind die Führungsbereiche zugleich die nach außen gekrümmten ersten Abflachungen oder Teilbereiche davon. Bei dieser Ausführungsart tragen die ersten Abflachungen keine Führungsrippen. Die ersten Abflachungen können zusätzlich mit zweiten Abflachungen versehen sein, wobei der Krümmungsradius der zweiten Abflachungen größer ist als der halbe Kerndurchmesser der Spindelmutter. Beim Spritzgießen in den zweiten Abflachungen erzeugte Entformungsgrate kommen nicht in Kontakt mit der Spindelmutter. Alternativ werden Entformungsgrate durch präzise Herstellung des Spritzgießwerkzeugs vermieden oder durch Nachbearbeitung entfernt.

Gemäß einer weiteren Ausführungsart ist das Außengewinde und das Innengewinde ein Trapezgewinde oder ein Spitzgewinde oder ein Rundgewinde oder ein Sägengewinde.

Gemäß einer weiteren Ausführungsart verjüngen sich die Gewindebereiche des Außengewindes zwischen den ersten Abflachungen in radialer Richtung nach außen. Dies ist vorteilhaft für die Entformung der Gewindespindel aus einem Spritzgießwerkzeug.

Gemäß einer weiteren Ausführungsart sind die äußeren längsseitigen Ränder der Führungsrippen und/oder die Übergänge von den Führungsrippen zu den ersten Abflachungen gerundet. Dies ist vorteilhaft für die Entformung aus dem Spritzgießwerkzeug. Die verrundeten längsseitigen Ränder der Führungsrippen reduzieren die Reibung der Gewindespindel in der Spindelmutter.

Gemäß einer weiteren Ausführungsart sind die von den Abflachungen begrenzten seitlichen Ränder der Gewindeprofile verrundet. Hierdurch wird das reibungsarme Gleiten der Gewindespindel in der Spindelmutter gefördert und die Abnutzung verringert. Auch ist dies vorteilhaft für die Entformung aus dem Spritzgießwerkzeug. Gemäß einer weiteren Ausführungsart sind die Übergänge der Flanken der Gewindeprofile zum Kern der Gewindespindel und/oder die in radialer Richtung äußeren Ränder der Gewindeprofile verrundet. Hierdurch wird das reibungsarme Gleiten der Gewindespindel in der Spindelmutter gefördert und die Abnutzung verringert. Auch ist dies vorteilhaft für die Entformung aus dem Spritzgießwerkzeug.

Gemäß einer weiteren Ausführungsart ist die Spindelmutter aus einem zweiten Kunststoff und/oder aus einem Metall hergestellt. Die Herstellung der Spindelmutter aus mindestens einem Kunststoff oder aus mindestens einem anderen spritzgießfähigen Material kann durch Spritzgießen erfolgen. Hierbei kann das Spritzgießwerkzeug einen entsprechenden Werkzeugkern zur Erzeugung des Innengewindes der Spindelmutter aufweisen. Ferner kann die Herstellung der Spindelmutter aus Kunststoff durch Sintern, Schneiden, Walzen und/oder Fräsen oder 3D-Druck erfolgen. Die Herstellung der Spindelmutter aus Metall kann durch Gewindeschneiden, Gewindeformen oder Gewindefräsen, durch MIM oder durch Sintern von Metallpulver erfolgen.

Gemäß einer weiteren Ausführungsart ist der erste Kunststoff ausgewählt aus mindestens einem der nachfolgenden Hochleistungskunststoffe: PEEK, PPS, LCP, PPA, PEI, PES, PPSU, PSU, PC-HT. Gemäß einer weiteren Ausführungsart ist der erste Kunststoff ausgewählt aus mindestens einem der nachfolgenden technischen Kunststoffe: PA, ABS. Die Gewindespindel kann ausschließlich aus einem der vorerwähnten Kunststoffe hergestellt werden oder im Mehrkomponenten-Spritzgießverfahren aus einer Kombination von mehreren der vorerwähnten Kunststoffe.

Gemäß einer weiteren Ausführungsart ist der zweite Kunststoff ausgewählt aus mindestens einem der nachfolgenden Hochleistungskunststoffe: PEEK, PPS, LCP, PPA, PEI, PES, PPSU, PSU, PC-HT. Gemäß einer weiteren Ausführungsart ist der zweite Kunststoff ausgewählt aus mindestens einem der technischen Kunststoffe: PA, ABS. Die Spindelmutter kann im Einkomponenten-Spritzgießverfahren aus nur einem der vorerwähnten Kunststoffe oder im Mehrkomponenten-Spritzgießverfahren aus mehreren der vorerwähnten Kunststoffe hergestellt werden.

Gemäß einer bevorzugten Ausführungsart sind der erste Kunststoff und der zweite Kunststoff Hochleistungskunststoffe.

Gemäß einer weiteren Ausführungsart sind die Gewindespindel und die Spindelmutter aus demselben Kunststoffmaterial hergestellt. Gemäß einer weiteren Ausführungsart sind Gewindespindel und Spindelmutter aus demselben Kunststoffmaterial hergestellt, wobei jedoch verschiedene Varianten der Kunststoffarten verwendet werden. Gemäß einer weiteren Ausführungsart sind Gewindespindel und Spindelmutter aus demselben Kunststoffmaterial hergestellt, die sich beispielsweise hinsichtlich der Zugabe von Füllstoffen oder Zuschlagsstoffen unterscheiden.

Gemäß einer bevorzugten Ausführungsart sind Mittel zum linearen Führen der Gewindespindel in Längsrichtung der Gewindespindel und Mittel zum Antreiben der Spindelmutter in Drehbewegung vorhanden. Bei dieser Ausführungsart wird die Spindelmutter in Drehbewegung versetzt und die Gewindespindel linear verlagert. Gemäß einer alternativen Ausführungsart sind Mittel zum Führen der Spindelmutter in Längsrichtung der Gewindespindel und Mittel zum Drehen der Gewindespindel vorhanden. Bei dieser Ausführungsart wird die Gewindespindel in Drehbewegung versetzt und hierdurch die Spindelmutter linear verlagert.

Gemäß einer weiteren Ausführungsart sind die Mittel zum linearen Führen mindestens ein mit der Gewindespindel oder der Spindelmutter verbundener Führungszapfen oder anderes erstes Führungselement und mindestens eine zur Gewindespindel parallele Führungsnut, in die der Führungszapfen eingreift oder anderes zweites Führungselement. Gemäß einer weiteren Ausführungsart sind die Mittel zum Drehen ein elektrischer Antriebsmotor, dessen Motorwelle mit der Gewindespindel oder der Spindelmutter gekoppelt ist. Gemäß einer weiteren Ausführungsart ist die Gewindespindel oder die Spindelmutter fest mit der Motorwelle verbunden oder über ein Zugmittelgetriebe, Zahnradgetriebe oder anderes Getriebe mit der Motorwelle oder der Spindelmutter gekoppelt.

Gemäß einer weiteren Ausführungsart umfasst der Spindelantrieb eine tragende Struktur, ist das zweite Führungselement fest mit der tragenden Struktur verbunden und ist der elektrische Antriebsmotor an der tragenden Struktur befestigt. Der Antriebsmotor verlagert die Gewindespindel oder die Spindelmutter entlang des zweiten Führungselements bezüglich der tragenden Struktur. Die tragende Struktur kann jegliche Struktur sein, die zum Befestigen von zweitem Führungselement und Antriebsmotor in definierten Positionen in Bezug aufeinander geeignet ist. Gemäß einer weiteren Ausführungsart besteht die tragende Struktur aus einem einzigen oder aus mehreren Bauteilen. Gemäß einer weiteren Ausführungsart ist die tragende Struktur ein Gehäuse und/oder ein Rahmen (Chassis) und/oder ein Träger.

Ferner betrifft die Erfindung eine Dosiervorrichtung umfassend einen erfindungsgemäßen Spindelantrieb. Gemäß einer bevorzugten Ausführungsart ist der Spindelantrieb gemäß einem der Ansprüche 1 bis 14 ausgebildet.

Gemäß einer Ausführungsart der Dosiervorrichtung umfasst eine Einstelleinrichtung zum Einstellen des Dosiervolumens den Spindelantrieb. Gemäß einer weiteren Ausführungsart ist die Gewindespindel oder die Spindelmutter fest mit einem Anschlag verbunden und weist eine mit einem Kolben in einem Zylinder gekoppelte Hubstange einen Gegenanschlag auf, der beim Verlagern der Hubstange auf den Anschlag trifft, wobei der Hub der Hubstange durch die Position des Anschlags begrenzt ist, die mittels des Spindelantriebs einstellbar ist. Die Dosiervorrichtung mit einstellbarem Dosiervolumen ist gemäß weiterer Ausführungsarten ein Direktverdrängersystem oder ein Luftpolstersystem.

Eine weitere Ausführungsart der Dosiervorrichtung ist eine elektronische Dosiervorrichtung umfassend einen mit der Gewindespindel gekoppelten elektrischen Antriebsmotor, eine fest an der tragenden Struktur angeordnete erste Aufnahme für einen Spritzenflansch eines Spritzenzylinders einer Spritze und einen Aufnahmekörper mit einer zweiten Aufnahme für ein Kolbenstangenende eines Spritzenkolbens der Spritze, wobei der Aufnahmekörper fest mit einem unteren Ende der Gewindespindel verbunden ist.

Diese elektronische Dosiervorrichtung ist ein Direktverdrängersystem.

Gemäß einer weiteren Ausführungsart umfasst die elektronische Dosiervorrichtung erste Mittel zum lösbaren Halten des Spritzenflansches in der ersten Aufnahme und zweite Mittel zum lösbaren Halten des Kolbenstangenendes in der zweiten Aufnahme. Die erste Aufnahme und die zweite Aufnahme sowie die ersten Mittel zum lösbaren Halten und die zweite Mittel zum lösbaren Halten sind vorzugsweise so ausgebildet, wie in der EP 0 656 229 B1 und US 5,620,660 A beschrieben.

Eine alternative Ausführungsart ist eine elektronische Dosiervorrichtung umfassend einen mit der Gewindespindel gekoppelten elektrischen Antriebsmotor, mindestens einen Zylinder, in dem ein Kolben verschiebbar angeordnet ist, der mit dem unteren Ende der Gewindespindel gekoppelt ist, mindestens einen Dichtsitz zum abdichtenden Festklemmen einer Pipettenspitze und mindestens einen Verbindungskanal, der ein Loch im Dichtsitz mit dem Zylinder verbindet.

Diese Dosiervorrichtung ist ein Luftpolstersystem.

Gemäß einer Ausführungsart ist der Dichtsitz die Mantelfläche eines konischen und/oder zylindrischen Ansatzes und ist das Loch in der Stirnfläche des Ansatzes vorhanden.

Gemäß einer weiteren Ausführungsart weist die elektronische Dosiervorrichtung nur einen einzigen Zylinder mit einem darin verschiebbaren Kolben auf. Hierbei handelt es sich um eine Einkanaldosiervorrichtung. Gemäß einer anderen Ausführungsart weist die elektronische Dosiervorrichtung mehrere parallele Zylinder mit einem darin verschieblichen Kolben sowie mehrere Dichtsitze auf, die jeweils über einen Verbindungskanal mit einem Zylinder verbunden sind. Hierbei handelt es sich um eine Mehrkanaldosiervorrichtung.

Gemäß einer weiteren Ausführungsart ist die Dosiervorrichtung eine Handdosiervorrichtung. Gemäß einer weiteren Ausführungsart ist die tragende Struktur der Handdosiervorrichtung ein Gehäuse und/oder ein Rahmen der Handdosiervorrichtung.

Gemäß einer weiteren Ausführungsart ist die elektronische Dosiervorrichtung ein Dosierautomat oder eine Workstation. Gemäß einer weiteren Ausführungsart ist der Spindelantrieb in einem austauschbaren Dosierwerkzeug angeordnet, das mit dem Roboterarm verbunden ist, an dem der Antriebsmotor befestigt ist. Das Dosierwerkzeug ist so mit dem Roboterarm verbunden, dass es an diesem gehalten und der Antriebsmotor mit der Spindelmutter verbunden ist. Die Verbindung von Dosierwerkzeug und Roboterarm ist so ausgebildet, dass sie gezielt lösbar ist. Das Dosierwerkzeug und seine Verbindung mit einem Werkzeughalter eines Roboterarms ist beispielsweise ausgebildet, wie in der EP 1 449 586 B1 und der US 7,402,440 B2 beschrieben.

Gemäß einer weiteren Ausführungsart ist die tragende Struktur ein Gehäuse und/oder Rahmen des Dosierwerkzeuges und/oder Roboterarms des Dosierautomaten oder Laborautomaten.

Gemäß einer weiteren Ausführungsart, die als Direktverdrängersystem ausgebildet ist, umfasst das Dosierwerkzeug die erste Aufnahme und die zweite Aufnahme sowie die ersten Mittel zum lösbaren Halten und die zweiten Mittel zum lösbaren Halten. Gemäß einer weiteren Ausführungsart, die als Luftpolstersystem ausgebildet ist, umfasst das Dosierwerkzeug mindestens einen Zylinder mit einem darin verschiebbaren Kolben, mindestens einen Dichtsitz zum abdichtenden Festklemmen einer Pipettenspitze und mindestens einen Verbindungskanal zum Verbinden eines Loches im Dichtsitz mit dem Zylinder.

Ferner betrifft die Erfindung eine Messeinrichtung, insbesondere Messschraube, umfassend einen erfindungsgemäßen Spindelantrieb. Gemäß einer weiteren Ausführungsart ist der Spindelantrieb gemäß einem der Ansprüche 1 bis 14 ausgebildet.

Gemäß einer weiteren Ausführungsart ist die Messschraube eine Bügelmessschraube, eine Innenmessschraube oder eine Tiefenmessschraube.

Ferner betrifft die Erfindung eine Stelleinrichtung umfassend einen erfindungsgemäßen Spindelantrieb. Gemäß einer Ausführungsart ist der Spindelantrieb gemäß einem der Ansprüche 1 bis 14 ausgebildet.

Die Erfindung wird nachfolgend anhand der anliegenden Zeichnungen von Ausführungsbeispielen näher erläutert. In den Zeichnungen zeigen:
- Fig. 1: eine elektronische Handdosiervorrichtung in einer Perspektivansicht von der Seite;
- Fig. 2: den unteren Teil derselben Dosiervorrichtung ohne vorderer Gehäusehälfte in derselben Perspektivansicht;
- Fig. 3: Spindelantrieb und elektrischen Antriebsmotor derselben Dosiervorrichtung in einer Perspektivansicht von der Seite;
- Fig. 4: Spindelantrieb derselben Dosiervorrichtung in einer vergrößerten, teilweise ausgebrochenen Perspektivansicht von der Seite;
- Fig. 5: Gewindespindel derselben Dosiervorrichtung in einer vergrößerten, perspektiven Teilansicht;
- Fig. 6: der Spindelantrieb in einem Querschnitt durch die Spindelmutter;
- Fig. 7: vergrößertes Detail VII von Fig. 6;
- Fig. 8: eine weitere elektronische Handdosiervorrichtung in einer Perspektivansicht von der Seite;
- Fig. 9: dieselbe Handdosiervorrichtung in einem Vertikalschnitt;
- Fig. 10: Unterteil derselben Handdosiervorrichtung mit Dosierantrieb in einer Perspektivansicht schräg von der Seite;
- Fig. 11: Unterteil derselben Handdosiervorrichtung mit Dosierantrieb in einem Vertikalschnitt;
- Fig. 12: derselbe Dosierantrieb in einer Perspektivansicht von der Seite;
- Fig. 13: derselbe Dosierantrieb in einer Rückansicht;
- Fig. 14: eine erfindungsgemäße Messschraube in einer Perspektivansicht von der Seite.

In der vorliegenden Anmeldung beziehen sich die Angaben "oben" und "unten" sowie davon abgeleitete Angaben auf eine vertikale Ausrichtung der Gewindespindel und Anordnung des Antriebsmotors oberhalb der Gewindespindel.

Mit denselben Begriffen angesprochene Merkmale verschiedener Ausführungsbeispiele sind nachfolgend mit denselben Bezugsziffern versehen.

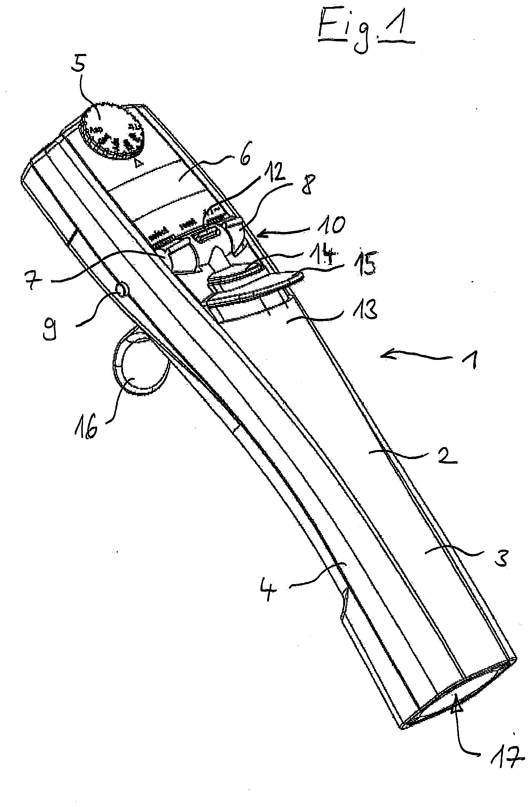

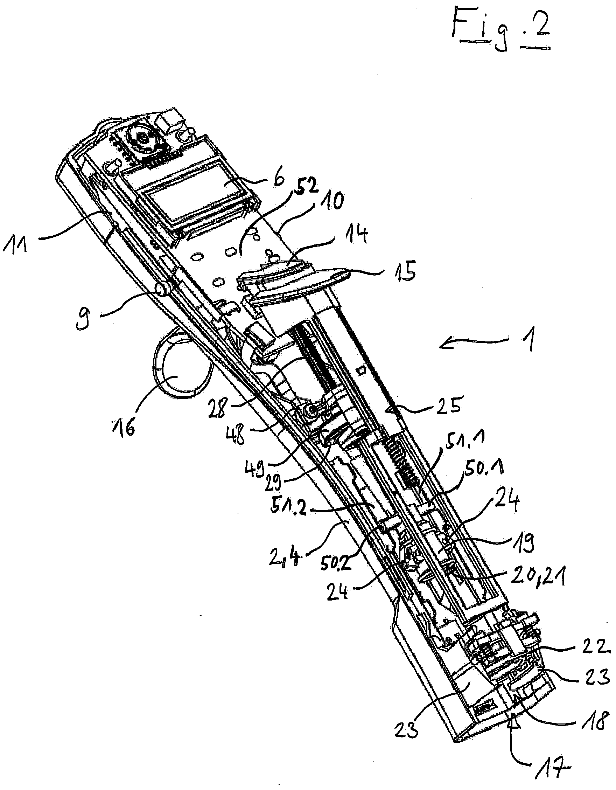

Die elektronische Handdosiervorrichtung 1 gemäß Fig. 1 und 2 ist ein elektronischer Handdispenser. Sie hat ein stangenförmiges Gehäuse 2, das in Längsrichtung in eine vordere Gehäuseschale 3 und eine hintere Gehäuseschale 4 geteilt ist.

Auf der Vorderseite des Gehäuses 2 befindet sich am oberen Ende ein Wahlrad 5 zur Auswahl des jeweiligen Betriebsmodus. Mittels des Wahlrades 5 sind beispielsweise die Dosierfunktionen Pipettieren, Dispensieren und Titrieren einstellbar.

Darunter ist in die Vorderseite des Gehäuses 2 ein Display 6 eingelassen.

Unterhalb des Displays 6 stehen von der Vorderseite des Gehäuses 2 zwei Wippschalter 7, 8 vor, die zum Anwählen verschiedener Menüfunktionen und Einstellen von Parametern dienen.

Auf der Höhe der Wippschalter 7, 8 befinden sich an der linken und der rechten Seite des Gehäuses elektrische Kontakte 9, 10 zum Aufladen eines Akkus einer elektrischen Spannungsversorgung 11. Der Akku ist im oberen Teil des Gehäuses 2 untergebracht.

Zwischen den beiden Wippschaltern 7, 8 befindet sich in der Vorderseite des Gehäuses eine Reset-Taste 12.

In der Mitte unterhalb der Reset-Taste 12 befindet sich oben auf einer vorderseitigen Auswölbung 13 des Gehäuses 2 eine Auslösetaste 14 zum Auslösen von Ansaug- und Dispensierschritten sowie zum Speichern von Parametereinstellungen. Vor der Auslösetaste 14 befindet sich eine Abwerfertaste 15, die in die sich nach unten die flache Vorderseite des Gehäuses 2 anschmiegende Auswölbung 13 eingreift.

Von der Rückseite des Gehäuses 2 steht nach hinten eine hakenförmige Fingerauflage 16 vor.

Am unteren Ende hat das Gehäuse 2 eine erste Öffnung 17, durch die hindurch eine erste Aufnahme 18 im Gehäuse 2 für einen Spritzenflansch eines Spritzenzylinders einer Spritze von außen zugänglich ist. Gemäß Fig. 2 befindet sich oberhalb der ersten Aufnahme 18 ein glockenförmiger Aufnahmekörper 19, in dem eine zweite Aufnahme 20 angeordnet ist, die durch eine zweite Öffnung 21 an der Unterseite des Aufnahmekörpers 19 für das Einsetzen eines Kolbenstangenendes eines Spritzenkolbens der Spritze zugänglich ist.

In der ersten Aufnahme 18 befinden sich erste Mittel zum lösbaren Halten des Spritzenflansches an einem Anschlag 22 im Gehäuse 2, die als Spritzengreifhebel 23 ausgebildet sind.

Der Aufnahmekörper 19 weist zweite Mittel zum lösbaren Halten in Form von Kolbengreifhebeln 24 auf, die dem lösbaren Halten des Spritzenkolbens in der zweiten Aufnahme 20 dienen.

Die Befestigung von Spritzenflansch und Spritzenkolben in den ersten und zweiten Aufnahmen 18, 20 mittels der ersten und zweiten Mittel zum lösbaren Halten ist durch Betätigen der Abwerfertaste 15 auflösbar, die über ein Getriebe 25 auf die Spritzengreifhebel 23 und Kolbengreifhebel 24 wirkt.

Wenn eine Spritze in der Dosiervorrichtung gehalten ist, ist der Spritzenkolben mittels eines Dosierantriebes 26 verlagerbar.

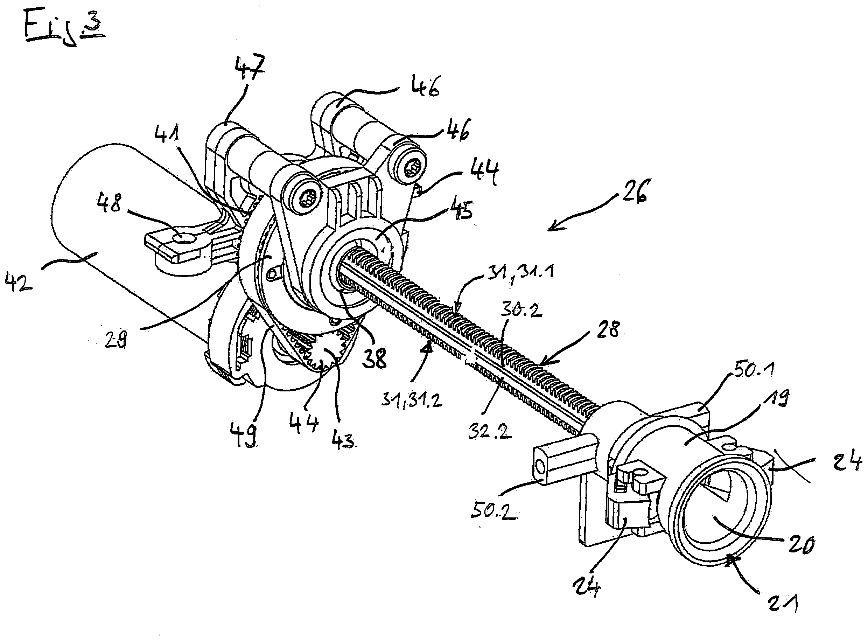

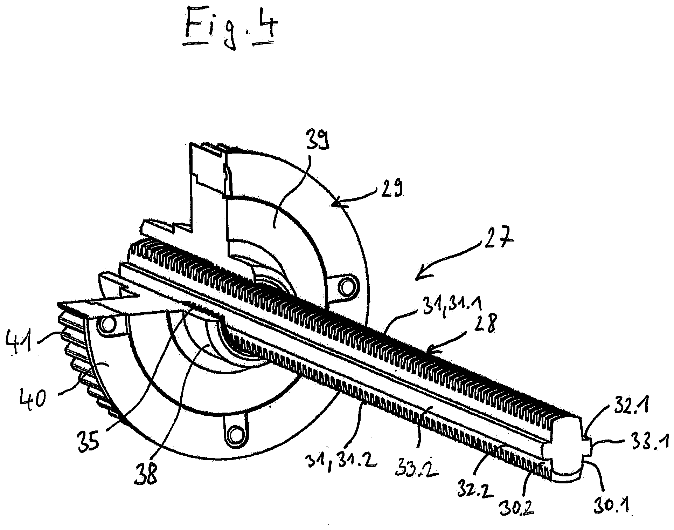

Gemäß Fig. 3 und 4 umfasst der Dosierantrieb 26 einen Spindelantrieb 27, der eine Gewindespindel 28 und eine Spindelmutter 29 aufweist.

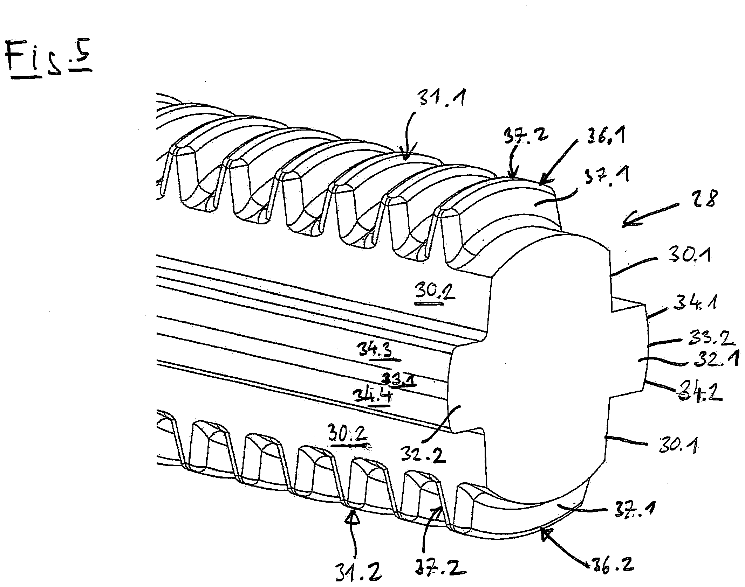

Die Gewindespindel 28 hat zwei in Längsrichtung erstreckte erste Abflachungen 30.1, 30.2 auf den beiden Seiten und dazwischen zwei Gewindebereiche 31.1, 31.2 eines Außengewindes 31. Gemäß Fig. 4 und 5 verjüngen sich im Querschnitt die Gewindebereiche 31.1, 31.2 in radialer Richtung nach außen.

Von den ersten Abflachungen 30.1, 30.2 stehen nach außen Führungsrippen 32.1, 32.2 vor. Gemäß Fig. 4 und 5 haben die Führungsrippen 32.1, 32.2 am äußeren Ende zweite Abflachungen 33.1, 33.2. Daneben weisen sie Führungsbereiche 34.1, 34.2, 34.3, 34.4 auf, deren Abstand von der Mittelachse der Gewindespindel 28 dem halben Kerndurchmesser eines Innengewindes 35 der Spindelmutter 29 entspricht.

Gemäß Fig. 5 hat das Außengewinde 31 trapezförmige Gewindeprofile 36.1, 36.2. Die in Radialrichtung äußeren Ränder der Gewindeprofile 36.1, 36.2 sind gerundet. Ferner sind auf beiden Seiten die Übergänge der Flanken 37.1, 37.2 der Gewindeprofile 36.1, 36.2 zum Kern der Gewindespindel 28 gerundet. Schließlich sind die durch die ersten Abflachungen 30.1, 30.2 begrenzten seitlichen Ränder der Gewindeprofile 36.1, 36.2 gerundet.

Auch die äußeren Ränder der Führungsrippen 32.1, 32.2 und die Übergänge der Führungsrippen 32.1, 32.2 zu den ersten Abflachungen 30.1, 30.2 sind gerundet.

Die Gewindespindel 28 wird so spritzgegossen, dass die Trennebene der beiden Hälften des Spritzgießwerkzeuges in die zweiten Abflachungen 33.1, 33.2 fällt. Die Verrundungen der Führungsrippen 32.1, 32.2 und der Gewindeprofile 36.1, 36.2 sind vorteilhaft für das Auffüllen der Spritzgießform und das Entformen des Spritzlings aus dem Spritzgießwerkzeug. Die Verrundungen der Profile 36.1, 36.2 und der Führungsbereiche 34.1, 34.2, 34.3, 34.4 sind zudem von Vorteil für das reibungs- und verschleißarme Verstellen der Gewindespindel 28 in der Spindelmutter 29.

Gemäß Fig. 4 hat die Spindelmutter 29 eine zentrale Hohlwelle 38, an deren Innenumfang das Innengewinde 35 ausgebildet ist. Das Innengewinde 35 erstreckt sich kontinuierlich über einen ersten Abschnitt der Hülse. Das Gewindeprofil des Innengewindes 35 ist ebenfalls trapezförmig, wobei die radial inneren Enden des Profils gerundet sind und die Übergänge zwischen den Flanken des Profils ebenfalls.

Auf der Hohlwelle 38 sitzt eine Kreisringscheibe 39, die als Zahnriemenrad 40 mit einer Zahnung 41 am Umfang ausgebildet ist. Die Hohlwelle 38 steht beidseitig von der Kreisringscheibe 39 vor.

Das Außengewinde 31 der Gewindespindel 28 und das Innengewinde 35 der Spindelmutter 29 sind aufeinander abgestimmt, so dass die Gewindespindel 28 in der Spindelmutter 29 verschraubbar ist.

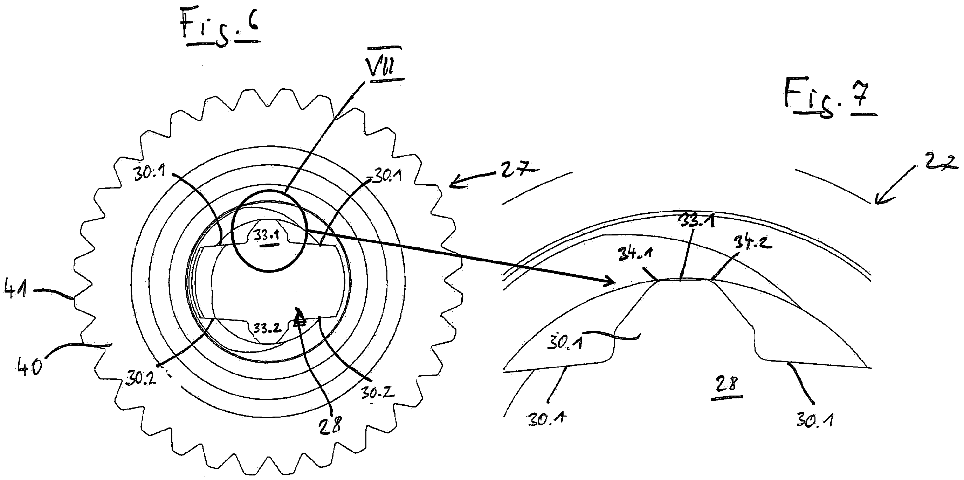

Gemäß Fig. 6 und 7 liegen die Führungsbereiche 34.1, bis 34.4 innen an jedem Gang des Innengewindes 35 der Spindelmutter 29 an.

Dazwischen besteht eine Spielpassung.

Weiterhin umfasst der Dosierantrieb 26 gemäß Fig. 3 einen elektrischen Antriebsmotor 42, der auf einer Motorwelle 43 ein weiteres Zahnriemenrad 44 trägt. Die Spindelmutter 29 ist an der Hohlwelle 38 in zwei Lagerbuchsen 45 drehbar gelagert, die in zwei parallelen Halteplatten 46 einer Halterung 47 in einem definierten Abstand voneinander und vom Antriebsmotor 42 gehalten ist. Die Halterung 47 weist Lageraugen 48 zum Fixieren im Gehäuse 2 auf.

Um die Zahnriemenräder 40, 44 ist ein Zahnriemen 49 herumgelegt, um die Drehung der Motorwelle 43 auf die Spindelmutter 29 zu übertragen.

Ferner umfasst der Dosierantrieb 26 zapfenförmige erste Führungselemente 50.1, 50.2, die in entgegengesetzten Richtungen vom Aufnahmekörper 19 nach außen vorstehen. Gemäß Fig. 2 wirken die ersten Führungselemente 50.1, 50.2 mit Führungsbahnen zwischen leistenförmigen zweiten Führungselementen 51.1, 51.2 an den Innenseiten der Gehäuseschalen 3, 4 zusammen. Hierdurch wird die Gewindespindel 28 an einer Drehung im Gehäuse 2 gehindert und der Aufnahmekörper 19 in Axialrichtung der Gewindespindel 28 geführt.

Ferner gehört zum Dosierantrieb 26 eine im Oberbereich des Gehäuses angeordnete elektrische Steuerungseinrichtung 52. Die Steuerungseinrichtung 52, der elektrische Antriebsmotor 42 und die übrigen elektronischen Bauteile der Dosiervorrichtung werden von der elektrischen Spannungsversorgung 11 gespeist.

Durch Bestromen des Antriebsmotors 42 wird die Motorwelle 43 und damit die Spindelmutter 29 in Drehung versetzt und die Gewindespindel 28 axial verlagert. Hierbei wird die Gewindespindel 28 an den Führungsbereichen 34.1 bis 34.4 im Innengewinde 35 geführt. Aufgrund der symmetrischen Anordnung der Führungsbereiche 34.1 bis 34.4 wird ein sehr gleichmäßiger Lauf der Gewindespindel 28 erreicht.

Die Gewindespindel 28 und die Spindelmutter 29 sind aus Kunststoffen und/oder Metall hergestellt. Vorzugsweise werden hierfür Hochleistungskunststoffe und/oder technische Kunststoffe verwendet. Beispielsweise bestehen die Gewindespindel 28 und die Spindelmutter 29 jeweils aus PEEK.

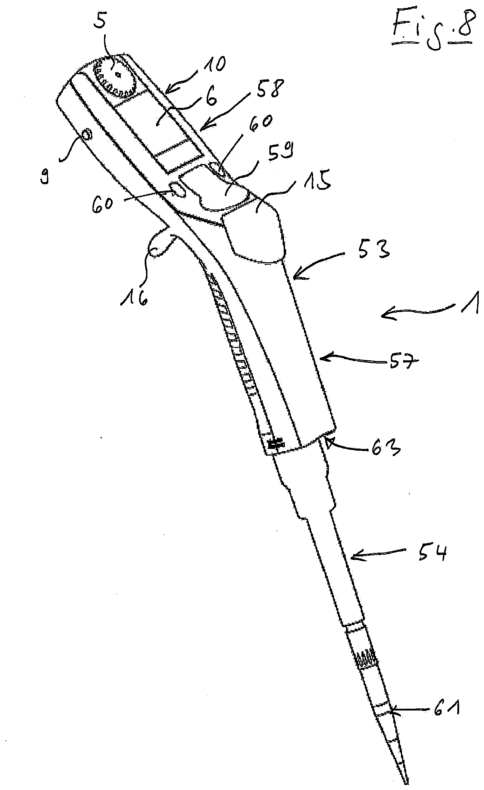

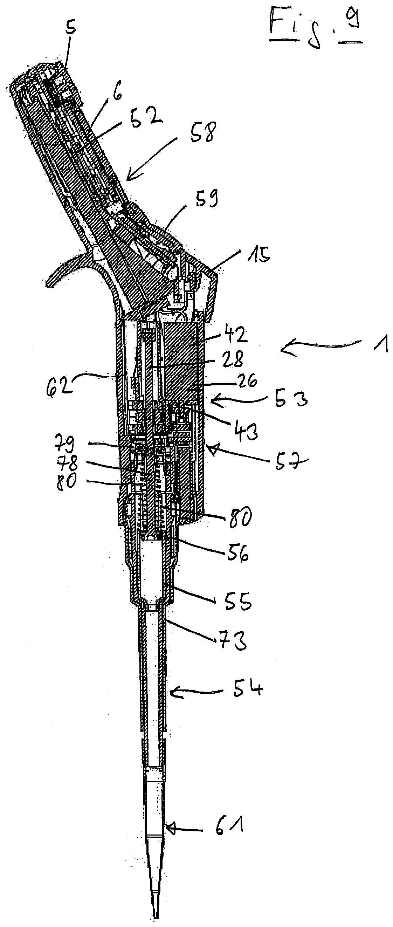

Die elektronische Handdosiervorrichtung 1 gemäß Fig. 8 und 9 ist eine elektronische Handpipette. Sie hat ein Gehäuseoberteil 53 in Form eines Handgriffs und ein im Wesentlichen zylindrisches Gehäuseunterteil 54. Das Gehäuseoberteil 53 enthält eine Antriebseinheit und das Gehäuseunterteil 54 eine Verdrängungseinheit aus einem Zylinder 55 und einem darin verschieblichen Kolben 56, der mittels der Antriebseinheit verlagerbar ist.

Das Gehäuseoberteil 53 weist einen im Wesentlichen zylindrischen Rumpfabschnitt 57 und einen kastenförmigen Kopfabschnitt 58 auf, der mit dem Rumpfabschnitt 57 einen stumpfen Winkel einschließt. Der Kopfaufschnitt weist auf der Vorderseite am oberen Ende ein Wahlrad 5 zur Auswahl des jeweiligen Betriebsmodus auf, bspw. Pipettieren, Dispensieren, Pipettieren und Mischen, reverses Pipettieren, Mehrfachaufnahme, sequentielles Dispensieren.

Unter dem Wahlrad 5 ist in die Vorderseite des Kopfabschnitts 58 ein Display 6 eingelassen.

Unterhalb des Displays 6 ist mittig eine Wipptaste 59 für die Steuerung der Aufnahme und Abgabe von Flüssigkeit und die Einstellung von Parametern vorhanden. Beidseitig der Wipptaste 59 sind weitere Tasten 60 für das Auswählen verschiedener Menüfunktionen und Einstellen von Parametern vorhanden.

Unterhalb der Wipptaste 59 befindet sich im Übergangsbereich zwischen Kopfabschnitt 58 und Rumpfabschnitt 57 auf der Vorderseite eine Abwerfertaste 15 zum Steuern des Abwerfens von Pipettenspitzen 61. Die Abwerfertaste 15 ist mit einer Abwerferstange verbunden, die sich im Rumpfabschnitt 57 bis zum unteren Ende desselben erstreckt.

Von der Rückseite des Kopfabschnitts 58 steht nach hinten eine hakenförmige Fingerauflage 16 vor.

Auf der Höhe des Displays 6 befinden sich auf der linken und rechten Seite des Kopfabschnitts 58 elektrische Kontakte 9, 10 zum Aufladen eines im Kopfabschnitt 58 untergebrachten Akkus einer elektrischen Spannungsversorgung 11. Der Akku ist mit einer im Kopfabschnitt 58 untergebrachten elektrischen Steuerungseinrichtung 52 verbunden. Die elektrische Steuerungseinrichtung 52 ist mit der Wipptaste 59 und den weiteren Tasten 60, einem Sensor zum Erfassung der Drehstellung des Wahlrads 5 und einem Antriebsmotor 42 eines Dosierantriebs 26 verbunden.

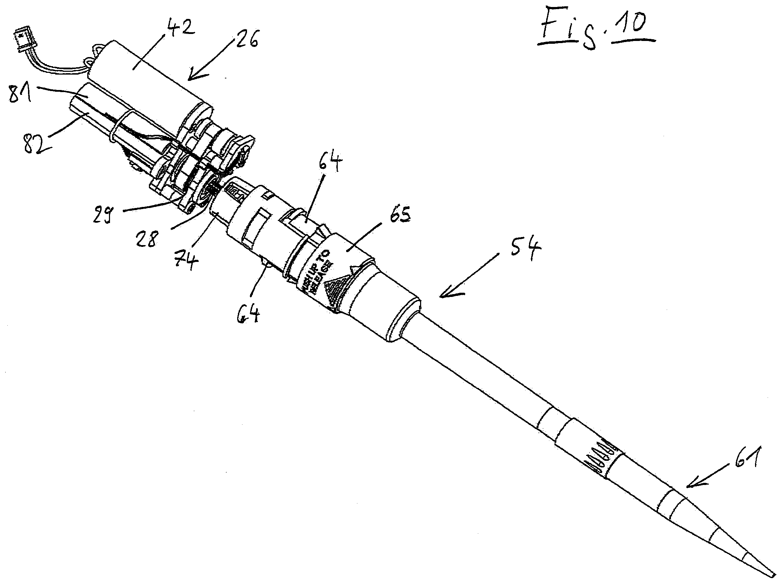

Der Rumpfabschnitt 57 weist einen Hohlraum 62 auf, in dem oben der Dosierantrieb 26 angeordnet ist, der weiter unten näher erläutert wird. Der Rumpfabschnitt 57 hat am unteren Ende eine untere Gehäuseöffnung 63, durch die hindurch das Gehäuseunterteil 54 mit seinem oberen Ende in den Hohlraum 62 des Rumpfabschnitts 57 eingesetzt ist. In der eingesetzten Stellung ist das Gehäuseunterteil 54 mit dem Gehäuseoberteil 53 durch Mittel zum lösbaren Verbinden von Gehäuseunterteil 54 und Gehäuseoberteil 53 lösbar verbunden. Gemäß Fig. 10 umfassen die Mittel zum lösbaren Verbinden umfassen eine Rastverbindung mit verfederten Rasthaken 64 des Gehäuseunterteils 54, die im Hohlraum 62 hinter Rastkanten des Gehäuseoberteils 53 verrastbar sind. Die Verrastung ist gezielt durch Verschieben einer außen am Gehäuseunterteil 54 geführten Entrastungshülse 65 aufhebbar.

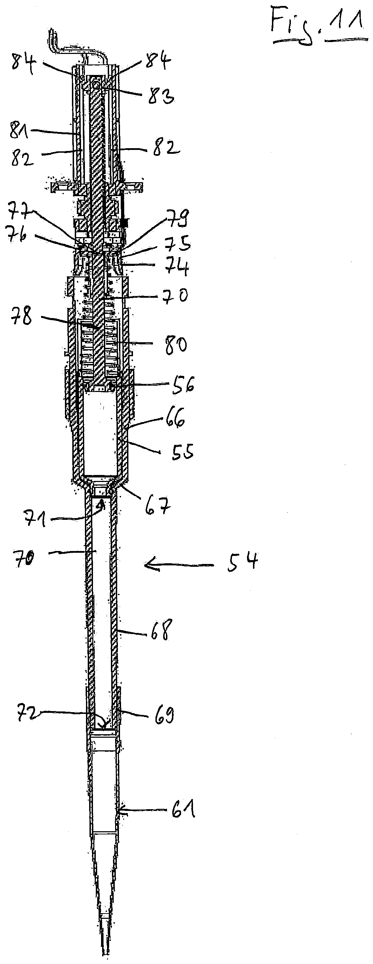

Gemäß Fig. 11 weist das Gehäuseunterteil 54 oben den Zylinder 55 mit dem darin in Längsrichtung verlagerbaren und abdichtend geführten Kolben 56 auf. Der Zylinder 55 ist als Buchse (*Liner*) ausgebildet, die in einem Zylinderabschnitt 66 des Gehäuseunterteils 54 gehalten ist. Der Zylinderabschnitt ist unten über einen konischen Verbindungsabschnitt 67 mit einem Röhrchen 68 verbunden, das am unteren Ende einen Dichtsitz 69 aufweist, auf den die Pipettenspitze 61 aufgeklemmt ist. Das Röhrchen 68 umgrenzt einen Verbindungskanal 70, der ein erstes Loch 71 am unteren Ende des Zylinders 55 mit einem zweiten Loch 72 im Dichtsitz 69 am unteren Ende des Röhrchens 68 verbindet.

Auf den Zylinderabschnitt 66, den Verbindungsabschnitt 67 und das Röhrchen 68 ist eine an die äußere Form derselben angepasste Abwerferhülse 72 zum Abdrücken der Pipettenspitze 61 vom Dichtsitz 69 aufgeschoben. Die Abwerferhülse 73 ist oben über lösbare Kupplungsmittel von Abwerferhülse 73 und Abwerferstange mit der Abwerferstange verbunden. Die lösbaren Kupplungsmittel bestehen in einem einfachen Fall in einem Klemmsitz des unteren Endes der Abwerferstange in einer Bohrung in einem seitlichen Vorsprung am oberen Rand der Abwerferhülse 73.

Das Gehäuseunterteil 54 trägt oben eine Verschlusskappe 74, deren Kappenmantel 75 mit dem Zylinderabschnitt 66 verbunden ist und die in einem Kappenboden 76 eine zentrale obere Gehäuseöffnung 77 aufweist.

Der Kolben 56 ist mit einer Kolbenstange 78 verbunden, die oben einen Teller 79 trägt. Zwischen Teller 79 und oberem Rand des Zylinders 55 ist eine Schraubenfeder 80 angeordnet, die den Teller 79 in eine Ausgangsstellung an der Unterseite des Kappenbodens 76 drückt.

Gemäß Fig. 9 bis 12 greift die Gewindespindel 28 des Dosierantriebs 26 mit ihrem unteren Ende durch die obere Gehäuseöffnung 77 hindurch in die Verschlusskappe 74 ein und liegt an der Oberseite des Tellers 79 an.

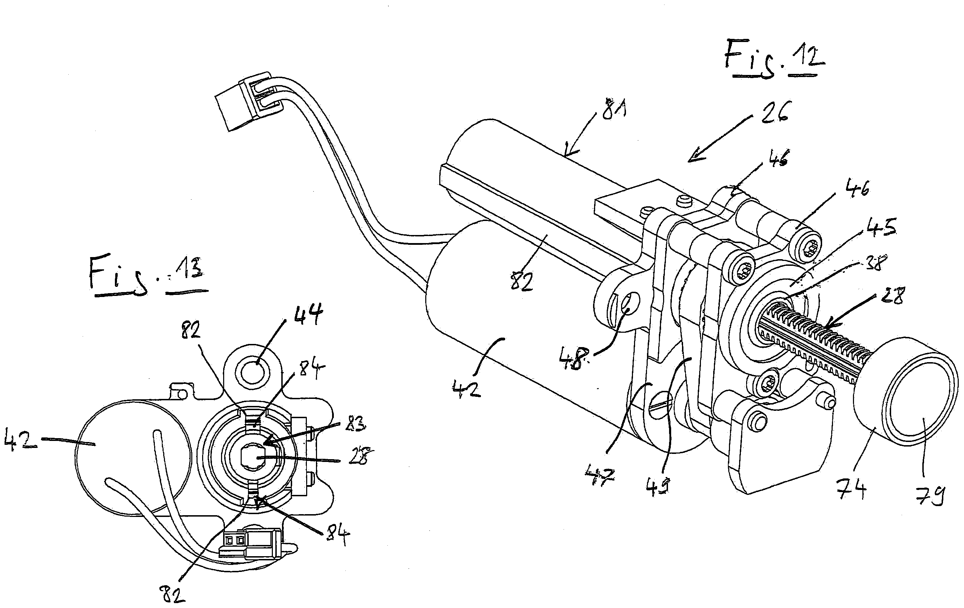

Gemäß Fig. 12 und 13 entspricht der Dosierantrieb 26 weitgehend dem Dosierantrieb 26 von Fig. 3, so dass die Ausführungen zu Fig. 3 entsprechend für die mit denselben Bezugsziffern versehenen Merkmale von Fig. 12 und 13 gelten. Bei dem Dosierantrieb 26 von Fig. 12 und 13 kontaktiert das untere Ende der Gewindespindel 28 den Teller 79 und ist nicht mit einem glockenförmigen Aufnahmekörper 19 verbunden. Somit entfällt bei Fig. 12 und 13 auch eine Führung des unteren Endes der Gewindespindel 28 durch Führungselemente 50.1, 50.2 am Aufnahmekörper 19. Vielmehr ist die Gewindespindel 28 am oberen Ende in einem Führungszylinder 81 geführt, der von der Oberseite der Halterung 47 für die Lagerbuchsen 45 der Spindelmutter 29 vorsteht.

Am Innenumfang weist der Führungszylinder 81 zwei Führungsnuten 82 auf, die sich in Längsrichtung des Führungszylinders 81 erstrecken. Die beiden Führungsnuten 82 liegen einander diametral gegenüber.

Gemäß Fig. 10 und 13 trägt die Gewindespindel 28 am oberen Ende ein hülsenförmiges Führungselement 83, das zwei nach außen vorstehende Führungsnasen 84 aufweist, die in die Führungsnuten 82 eingreifen. Das Führungselement 83 ist fest mit der Gewindespindel 28 verbunden. Durch das Führungselement 83 wird zum einen in die Gewindespindel 28 in dem Führungszylinder 81 linear geführt und zum anderen an einem Verdrehen gehindert. Infolge dessen ist die Gewindespindel 28 durch Drehen der Spindelmutter 29 in Längsrichtung verlagerbar.

Durch Bestromen des Antriebsmotors 42 wird die Motorwelle 43 gedreht, über den Zahnriemen 49 die Spindelmutter 29 in Drehung versetzt und die Gewindespindel 28 axial verlagert. Bei Verlagerung der Gewindespindel 28 nach unten wird der Kolben 56 tiefer in den Zylinder 55 eingeschoben und bei Verlagerung der Gewindespindel 28 nach oben verlagert, da der Teller 79 durch die vorgespannte Schraubenfeder 80 in Anlage am unteren Ende der Gewindespindel 28 gehalten wird. Hierdurch wird in dem Röhrchen 68 eine Luftsäule verlagert, die Flüssigkeit in die Pipettenspitze 61 einsaugt oder aus dieser ausstößt.

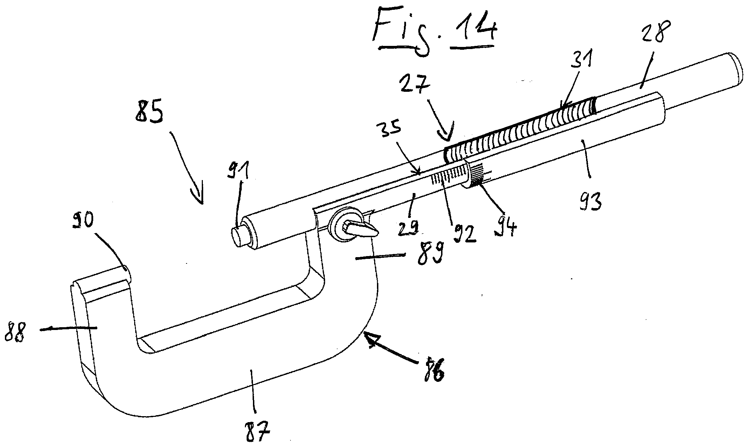

Fig. 14 zeigt eine Messschraube 85, die als Bügelmessschraube ausgebildet ist. Ein biegesteifer Bügel 86 hat eine Basis 87 und zwei Bügelarme 88, 89. An einer Innenseite eines ersten Bügelarmes 88 ist eine kreisscheibenförmige erste Messbacke 90 befestigt, die eine plane erste Kontaktfläche an ihrem freien Ende aufweist.

An einem zweiten Bügelarm 89 ist eine Spindelmutter 29 befestigt. Der obere Teil der Spindelmutter 29 ist in der Zeichnung zum besseren Verständnis weggeschnitten. In ein Innengewinde 35 der Spindelmutter 29 greift eine Gewindespindel 28 mit ihrem Außengewinde 31 ein und bildet mit dieser einen Spindelantrieb. Die Gewindespindel 28 ist auf einer Seite mit einer zylindrischen zweiten Messbacke 91 fest verbunden, die an ihrem freien Ende eine plane zweite Kontaktfläche aufweist. Die Spindelmutter weist an der Außenseite eine in Längsrichtung verlaufende erste Skala 92 mit einer Millimetereinteilung auf.

Auf der anderen Seite ist die Gewindespindel 28 über eine nicht gezeigte Rutschkupplung ("Gefühlsrutsche") mit einer Messhülse 93 verbunden. Der obere Teil der Messhülse 93 ist in der Zeichnung zum besseren Verständnis weggeschnitten. Die Messhülse 93 weist eine in Umfangsrichtung verlaufende zweite Skala 94 mit einer Hundertstel-Millimetereinteilung auf.

Die Gewindespindel 28 und die Spindelmutter 29 sind ein erfindungsgemäß ausgebildeter Spindelantrieb 27. Infolgedessen ist die Messschraube 85 kostengünstig herstellbar, besonders leicht und liefert genaue Messergebnisse.

### Bezugszeichenliste:

- 1: elektronische Handdosiervorrichtung
- 2: Gehäuse
- 3: vordere Gehäuseschale
- 4: hintere Gehäuseschale
- 5: Wahlrad
- 6: Display
- 7, 8: Wippschalter
- 9, 10: elektrischer Kontakt
- 11: Spannungsversorgung
- 12: Reset-Taste
- 13: Auswölbung
- 14: Auslösetaste
- 15: Abwerfertaste
- 16: Fingerauflage
- 17: erste Öffnung
- 18: erste Aufnahme
- 19: Aufnahmekörper
- 20: zweite Aufnahme
- 21: zweite Öffnung
- 22: Anschlag
- 23: Spritzengreifhebel
- 24: Kolbengreifhebel
- 25: Getriebe
- 26: Dosierantrieb
- 27: Spindelantrieb
- 28: Gewindespindel
- 29: Spindelmutter
- 30.1, 30.2: erste Abflachung
- 31: Außengewinde
- 31.1, 31.2: Gewindebereich
- 32.1, 32.2: Führungsrippe
- 33.1, 33.2: zweite Abflachung
- 34.1, 34.2, 34.3, 34.4: Führungsbereich
- 35: Innengewinde
- 36.1, 36.2: Gewindeprofile
- 37.1, 37.2: Flanken
- 38: Hohlwelle
- 39: Kreisringscheibe
- 40: Zahnriemenrad
- 41: Zahnung
- 42: Antriebsmotor
- 43: Motorwelle
- 44: Zahnriemenrad
- 45: Lagerbuchse
- 46: Halteplatte
- 47: Halterung
- 48: Lagerauge
- 49: Zahnriemen
- 50.1, 50.2: erstes Führungselement
- 51.1, 51.2: zweites Führungselement
- 52: Steuerungseinrichtung
- 53: Gehäuseoberteil
- 54: Gehäuseunterteil
- 55: Zylinder
- 56: Kolben
- 57: Rumpfabschnitt
- 58: Kopfabschnitt
- 59: Wipptaste
- 60: Taste
- 61: Pipettenspitze
- 62: Hohlraum
- 63: untere Gehäuseöffnung
- 64: Rasthaken
- 65: Entrastungshülse
- 66: Zylinderabschnitt
- 67: Verhinderungsabschnitt
- 68: Röhrchen
- 69: Dichtsitz
- 70: Verbindungskanal
- 71: Loch
- 72: Loch
- 73: Abwerferhülse
- 74: Verschlusskappe
- 75: Kappenmantel
- 76: Kappenboden
- 77: Gehäuseöffnung
- 78: Kolbenstange
- 79: Teller
- 80: Schraubenfeder
- 81: Führungszylinder
- 82: Führungsnut
- 83: Führungselement
- 84: Führungsnase
- 85: Messschraube
- 86: Bügel
- 87: Basis
- 88: erster Bügelarm
- 89: zweiter Bügelarm
- 90: erste Messbacke
- 91: zweite Messbacke
- 92: erste Skala
- 93: Messhülse
- 94: zweite Skala

## Patentansprüche

1. Spindelantrieb umfassend
- eine Gewindespindel (28) mit einem Außengewinde (31),
- eine Spindelmutter (29) mit einem Innengewinde (35), das mit dem Außengewinde (31) der Gewindespindel (28) in Eingriff steht, wobei
- das Außengewinde (31) der Gewindespindel (28) mehrere Gewindebereiche (31.1, 31.2) aufweist, die durch in Längsrichtung erstreckte erste Abflachungen (27.1, 27.2) an ihrem Umfang voneinander getrennt sind, **dadurch gekennzeichnet, dass**
- die ersten Abflachungen (30.1, 30.2) Führungsbereiche (34.1, 34.2, 34.3, 34.4) aufweisen, die am Kerndurchmesser des Innengewindes (35) der Spindelmutter (29) anliegen.

2. Spindelantrieb nach Anspruch 1, bei dem die Gewindespindel (28) ein Spritzgießteil ist.

3. Spindelantrieb nach Anspruch 1 oder 2, bei dem die Gewindespindel (28) aus einem ersten Kunststoff besteht, wobei vorzugsweise die Gewindespindel (28) aus dem ersten Kunststoff spritzgegossen ist, oder bei dem die Gewindespindel (28) aus einem Metall besteht, wobei die Gewindespindel vorzugsweise durch Metallpulverspritzgießen hergestellt ist.

4. Spindelantrieb gemäß einem der Ansprüche 1 bis 3, bei dem die ersten Abflachungen (30.1, 30.2) Führungsrippen (32.1, 32.2) tragen, die an den äußeren Enden die Führungsbereiche (34.1, 34.2, 34.3, 34.4) aufweisen.

5. Spindelantrieb gemäß Anspruch 4, bei dem die Gewindespindel (28) nur zwei einander diametral gegenüberliegende erste Abflachungen (30.1, 30.2) aufweist, wobei sie vorzugsweise nur zwei einander diametral gegenüberliegende Führungsrippen (32.1, 32.2) aufweist.

6. Spindelantrieb gemäß Anspruch 4 oder 5, bei dem die Führungsrippen (32.1, 32.2) jeweils an den Enden eine zweite Abflachung (33.1, 33.2) und angrenzend an den beiden seitlichen Rändern der zweiten Abflachung (33.1, 33.2) Führungsbereiche (34.1, 34.2, 34.3, 34.4) in einem Abstand von der Mittelachse der Gewindespindel (28) entsprechend dem halben Kerndurchmesser der Spindelmutter (29) aufweisen.

7. Spindelantrieb gemäß einem der Ansprüche 1 bis 6, bei dem die ersten Abflachungen (30.1, 30.2) ebene Flächen sind und/oder bei dem die zweiten Abflachungen (33.1, 33.2) ebene Flächen sind.

8. Spindelantrieb gemäß einem der Ansprüche 1 bis 7, bei dem sich die Gewindebereiche (31.1, 31.2) des Außengewindes (31) zwischen den ersten Abflachungen (30.1, 30.2) in radialer Richtung nach außen verjüngen.

9. Spindelantrieb nach einem der Ansprüche 4 bis 8, bei dem die äußeren Ränder der Führungsrippen (32.1, 32.2) und/oder die Übergänge von den Führungsrippen (32.1, 32.2) in die ersten Abflachungen (30.1, 30.2) gerundet sind.

10. Spindelantrieb gemäß einem der Ansprüche 1 bis 9, bei dem die von den ersten Abflachungen (30.1, 30.2) begrenzten seitlichen Ränder der Gewindeprofile (36.1, 36.2) verrundet sind.

11. Spindelantrieb gemäß einem der Ansprüche 1 bis 10, bei dem die Übergänge der Flanken (37.1, 37.2) der Gewindeprofile (36.1, 36.2) zum Kern der Gewindespindel (28) und/oder die in radialer Richtung außen angeordneten Ränder der Gewindeprofile (36.1, 36.2) verrundet sind.

12. Spindelantrieb nach einem der Ansprüche 1 bis 11, bei dem die Spindelmutter (29) aus einem zweiten Kunststoff und/oder aus einem Metall hergestellt ist.

13. Spindelantrieb gemäß einem der Ansprüche 3 bis 12, bei dem der erste Kunststoff ein Hochleistungskunststoff ausgewählt aus mindestens einem der nachfolgenden Hochleitungsstoffe: PEEK, PPS, LCP, PPA, PEI, PES, PPSU, PSU, PC-HT oder ein technischer Kunststoff ausgewählt aus mindestens einem der nachfolgenden technischen Kunststoffe: PA, ABS ist und/oder bei dem der zweite Kunststoff ein Hochleistungskunststoff ausgewählt aus mindestens einem der nachfolgenden Hochleistungskunststoffe: PEEK, PPS, LCP, PPA, PEI, PES, PPSU, PSU, PC-HT oder ein technischer Kunststoff ausgewählt aus mindestens einem der nachfolgenden technischen Kunststoffe: PA, ABS ist.

14. Spindelantrieb gemäß einem der Ansprüche 1 bis 13, umfassend einen elektrischen Antriebsmotor, der mit der Gewindespindel oder der Spindelmutter gekoppelt ist.

15. Dosiervorrichtung umfassend einen Spindelantrieb (27) gemäß einem der Ansprüche 1 bis 14.

16. Messeinrichtung, insbesondere Messschraube (85), umfassend einen Spindelantrieb (27) gemäß einem der Ansprüche 1 bis 14.

17. Stelleinrichtung umfassend einen Spindelantrieb gemäß einem der Ansprüche 1 bis 14.

## Claims

1. A spindle drive comprising
- a threaded spindle (28) having an external thread (31),
- a spindle nut (29) having an internal thread (35) that is engaged with the external thread (31) of the threaded spindle (28),
wherein
- the external thread (31) of the threaded spindle (28) comprises a plurality of threaded regions (31.1, 31.2) that are separated from one another at the periphery thereof by means of first flattened portions (27.1, 27.2) that extend in the longitudinal direction,
**characterized in that**
- the first flattened portions (30.1, 30.2) comprise guide regions (34.1, 34.2, 34.3, 34.4) that rest against the minor diameter of the internal thread (35) of the spindle nut (29).

2. The spindle drive according to claim 1, wherein the threaded spindle (28) is an injection-molded part.

3. The spindle drive according to claim 1 or 2, wherein the threaded spindle (28) consists of a first plastics material, the threaded spindle (28) preferably being injection-molded from the first plastics material, or wherein the threaded spindle (28) consists of a metal, the threaded spindle preferably being produced by means of metal powder injection molding.

4. The spindle drive according to any one of claims 1 to 3, wherein the first flattened portions (30.1, 30.2) support guide ribs (32.1, 32.2) that comprise the guide regions (34.1, 34.2, 34.3, 34.4) on the outer ends.

5. The spindle drive according to claim 4, wherein the threaded spindle (28) only comprises two diametrically opposed first flattened portions (30.1, 30.2), said threaded spindle preferably only comprising two diametrically opposed guide ribs (32.1, 32.2).

6. The spindle drive according to claim 4 or 5, wherein the guide ribs (32.1, 32.2) each comprise a second flattened portion (33.1, 33.2) on the ends and each comprise guide regions (34.1, 34.2, 34.3, 34.4) that are adjacent to the two lateral edges of the second flattened portion (33.1, 33.2) and at a distance from the central axis of the threaded spindle (28) that corresponds to half of the minor diameter of the spindle nut (29).

7. The spindle drive according to any one of claims 1 to 6, wherein the first flattened portions (30.1, 30.2) are flat surfaces and/or wherein the second flattened portions (33.1, 33.2) are flat surfaces.

8. The spindle drive according to any one of claims 1 to 7, wherein the threaded regions (31.1, 31.2) of the external thread (31) taper outward in the radial direction between the first flattened portions (30.1, 30.2).

9. The spindle drive according to any one of claims 4 to 8, wherein the outer edges of the guide ribs (32.1, 32.2) and/or the transitions from the guide ribs (32.1, 32.2) into the first flattened portions (30.1, 30.2) are rounded.

10. The spindle drive according to any one of claims 1 to 9, wherein the lateral edges of the thread profiles (36.1, 36.2) delimited by the first flattened portions (30.1, 30.2) are chamfered.

11. The spindle drive according to any one of claims 1 to 10, wherein the transitions of the flanks (37.1, 37.2) of the thread profiles (36.1, 36.2) to the core of the threaded spindle (28) and/or the edges of the thread profiles (36.1, 36.2) arranged on the outside in the radial direction are chamfered.

12. The spindle drive according to any one of claims 1 to 11, wherein the spindle nut (29) is produced from a second plastics material and/or from a metal.

13. The spindle drive according to any one of claims 3 to 12, wherein the first plastics material is a high-performance plastics material selected from at least one of the following high-performance materials: PEEK, PPS, LCP, PPA, PEI, PES, PPSU, PSU, PC-HT or an engineering plastics material selected from at least one of the following engineering plastics materials: PA, ABS and/or wherein the second plastics material is a high-performance plastics material selected from at least one of the following high-performance plastics materials: PEEK, PPS, LCP, PPA, PEI, PES, PPSU, PSU, PC-HT or an engineering plastics material selected from at least one of the following engineering plastics materials: PA, ABS.

14. The spindle drive according to any one of claims 1 to 13, comprising an electric drive motor that is coupled to the threaded spindle or to the spindle nut.

15. A dosing device comprising a spindle drive (27) according to any one of claims 1 to 14.

16. A measuring apparatus, in particular a micrometer (85), comprising a spindle drive (27) according to any one of claims 1 to 14.

17. An actuating apparatus comprising a spindle drive according to any one of claims 1 to 14.

## Revendications

1. Entraînement à broche comportant
- une broche filetée (28) avec un filetage extérieur (31),
- un écrou de broche (29) avec un filetage intérieur (35), lequel est en prise avec le filetage extérieur (31) de la broche filetée (28),
dans lequel
- le filetage extérieur (31) de la broche filetée (28) présente plusieurs régions filetées (31.1, 31.2), lesquelles sont séparées les unes des autres sur leur pourtour par des premiers méplats (27.1, 27.2) s'étendant dans la direction longitudinale,
**caractérisé en ce que**
- les premiers méplats (30.1, 30.2) présentent des régions de guidage (34.1, 34.2, 34.3, 34.4), lesquelles s'appliquent sur le diamètre du cœur du filetage intérieur (35) de l'écrou de broche (29).

2. Entraînement à broche selon la revendication 1, dans lequel la broche filetée (28) est une pièce moulée par injection.

3. Entraînement à broche selon la revendication 1 ou 2, dans lequel la broche filetée (28) est constituée d'une première matière plastique, la broche filetée (28) étant de préférence moulée par injection à partir de la première matière plastique, ou dans lequel la broche filetée (28) est constituée d'un métal, la broche filetée étant de préférence fabriquée par moulage par injection de poudre métallique.

4. Entraînement à broche selon l'une des revendications 1 à 3, dans lequel les premiers méplats (30.1, 30.2) portent des nervures de guidage (32.1, 32.2), lesquelles présentent les régions de guidage (34.1, 34.2, 34.3, 34.4) aux extrémités extérieures.

5. Entraînement à broche selon la revendication 4, dans lequel la broche filetée (28) ne présente que deux premiers méplats (30.1, 30.2) diamétralement opposés, sachant qu'elle ne présente de préférence que deux nervures de guidage (32.1, 32.2) diamétralement opposées.

6. Entraînement à broche selon la revendication 4 ou 5, dans lequel les nervures de guidage (32.1, 32.2) présentent respectivement un deuxième méplat (33.1, 33.2) aux extrémités et des régions de guidage (34.1, 34.2, 34.3, 34.4) adjacentes aux deux bords latéraux du deuxième méplat (33.1, 33.2), à une distance de l'axe médian de la broche filetée (28) correspondant à la moitié du diamètre de cœur de l'écrou de broche (29).

7. Entraînement à broche selon l'une des revendications 1 à 6, dans lequel les premiers méplats (30.1, 30.2) sont des surfaces planes et/ou dans lequel les deuxièmes méplats (33.1, 33.2) sont des surfaces planes.

8. Entraînement à broche selon l'une des revendications 1 à 7, dans lequel les régions filetées (31.1, 31.2) du filetage extérieur (31) entre les premiers méplats (30.1, 30.2) s'effilent vers l'extérieur dans la direction radiale.

9. Entraînement à broche selon l'une des revendications 4 à 8, dans lequel les bords extérieurs des nervures de guidage (32.1, 32.2) et/ou les transitions des nervures de guidage (32.1, 32.2) vers les premiers méplats (30.1, 30.2) sont arrondis.

10. Entraînement à broche selon l'une des revendications 1 à 9, dans lequel les bords latéraux des profilés filetés (36.1, 36.2) délimités par les premiers méplats (30.1, 30.2) sont arrondis.

11. Entraînement à broche selon l'une des revendications 1 à 10, dans lequel les transitions des flancs (37.1, 37.2) des profilés filetés (36.1, 36.2) vers le cœur de la broche filetée (28) et/ou les bords des profilés filetés (36.1, 36.2) disposés extérieurement dans la direction radiale sont arrondis.

12. Entraînement à broche selon l'une des revendications 1 à 11, dans lequel l'écrou de broche (29) est constitué d'une deuxième matière plastique et/ou d'un métal.

13. Entraînement à broche selon l'une des revendications 3 à 12, dans lequel la première matière plastique est une matière plastique à haute performance sélectionnée à partir de l'une au moins des matières plastiques à haute performance suivantes : PEEK, PPS, LCP, PPA, PEI, PES, PPSU, PSU, PC-HT ou une matière plastique technique sélectionnée parmi l'une au moins des matières plastiques techniques suivantes : PA, ABS et/ou dans lequel la deuxième matière plastique est une matière plastique à haute performance sélectionnée parmi l'une au moins des matières plastiques à haute performance suivantes : PEEK, PPS, LCP, PPA, PEI, PES, PPSU, PSU, PC-HT ou une matière plastique technique sélectionnée parmi l'une au moins des matières plastiques techniques suivantes : PA, ABS.

14. Entraînement à broche selon l'une des revendications 1 à 13, comportant un moteur d'entraînement électrique, lequel est couplé à la broche filetée ou à l'écrou de broche.

15. Dispositif de dosage comportant un entraînement à broche (27) selon l'une des revendications 1 à 14.

16. Système de mesure, en particulier une vis de mesure (85), comportant un entraînement à broche (27) selon l'une des revendications 1 à 14.

17. Système de réglage comportant un entraînement à broche selon l'une des revendications 1 à 14.
